# EUROPÄISCHE PATENTSCHRIFT

(11) **EP 3 321 636 B1**
(45) Veröffentlichungstag und Bekanntmachung des Hinweises auf die Patenterteilung: **06.03.2019**
(21) Anmeldenummer: 17189395.1
(22) Anmeldetag: 05.09.2017
(51) Int. Cl.: G01D 1/18, G01D 5/244, G01D 18/00, G01D 5/347

(54) **POSITIONSMESSEINRICHTUNG UND VERFAHREN ZUM BETREIBEN EINER POSITIONSMESSEINRICHTUNG**
POSITION MEASURING DEVICE AND METHOD FOR OPERATING SAME
DISPOSITIF DE MESURE DE POSITION ET SON PROCÉDÉ DE FONCTIONNEMENT

(30) Priorität: 14.11.2016 DE 102016222275
(43) Veröffentlichungstag der Anmeldung: 16.05.2018
(73) Patentinhaber: Dr. Johannes Heidenhain GmbH, 83301 Traunreut (DE)
(72) Erfinder: von BERG, Martin, 83236 Übersee (DE)

(56) Entgegenhaltungen:
- EP-A1- 1 302 753
- DE-A1-102010 061 737
- US-A1- 2005 072 016
- US-A1- 2014 303 923

## Beschreibung

### GEBIET DER TECHNIK

Die vorliegende Erfindung betrifft eine Positionsmesseinrichtung nach dem Oberbegriff von Anspruch 1, sowie ein Verfahren zum Betreiben einer Positionsmesseinrichtung nach Anspruch 7. Sie ermöglicht inkrementalen Positionsmesseinrichtungen die Signalisierung von Statusinformationen an eine Folgeelektronik.

### STAND DER TECHNIK

Inkrementale Positionsmesseinrichtungen werden in der Automatisierungstechnik und insbesondere bei Werkzeugmaschinen dazu eingesetzt, Positionsänderungen von beweglichen Teilen zu messen. So messen inkrementale Drehgeber rotatorische Bewegungen, beispielsweise von sich drehenden Wellen. Inkrementale Längenmessgeräte dagegen messen lineare Verschiebungen zueinander beweglich angeordneter Maschinenteile.

In bekannten inkrementalen Positionsmesseinrichtungen wird eine Teilungsspur, die aus regelmäßig angeordneten Codeelementen besteht, von einer Detektoreinheit abgetastet. Dabei können verschiedenste physikalische Abtastprinzipien zum Einsatz kommen, beispielsweise optische, magnetische, induktive oder kapazitive. Die aus der Abtastung resultierenden Detektorsignale sind bei gleichförmiger Bewegung (konstante Geschwindigkeit, bzw. konstante Drehzahl) bevorzugt weitgehend sinusförmig, die Positionsinformation kann beispielsweise durch Zählen der zurückgelegten Signalperioden oder, wenn eine erhöhte Auflösung gefordert ist, zusätzlich durch Unterteilung der Signalperioden in eine Anzahl von Winkelsegmenten (Interpolation) gewonnen werden. Eine Richtungsinformation kann erhalten werden, wenn bei der Abtastung zwei Detektorsignale erzeugt werden, die eine Phasenverschiebung, z.B. 90°, zueinander aufweisen. Um einen absoluten Bezugspunkt für die prinzipbedingt relative Positionsmessung inkrementaler Positionsmesseinrichtungen zu schaffen, wird häufig an wenigstens einer Position ein Referenzimpuls erzeugt. Hierfür kann auf einer separaten Teilungsspur eine geeignete Teilungsstruktur angeordnet sein, die ebenfalls von der Detektoreinheit abgetastet wird.

Die von der Detektoreinheit gewonnenen Detektorsignale werden in einer Signalverarbeitungseinheit verarbeitet und entsprechend einer Spezifikation einer Ausgangsschnittstelle angepasst. Eine bekannte Schnittstelle für inkrementale Positionsmesseinrichtungen erfordert beispielsweise für die Inkrementalsignale einen Spitze-Spitze-Wert von 1V.

Neben solchen analogen Schnittstellen gibt es auch welche, die digitale Inkrementalsignale ausgeben. In diesem Fall werden in der Signalverarbeitungseinheit aus den analogen Detektorsignalen digitale, also rechteckförmige Inkrementalsignale erzeugt. Auch hier gilt, dass für eine bewegungsrichtungsabhängige Positionsmessung zwei zueinander phasenverschobene digitale Inkrementalsignale erforderlich sind.

Der Referenzimpuls wird ebenfalls, je nach Schnittstelle, analog oder digital ausgegeben.

Die Übertragung der (analogen oder digitalen) Inkrementalsignale, sowie des Referenzimpulses zu einer Folgeelektronik erfolgt über hochwertige, meist geschirmte, mehradrige Kabel. Sie kann sowohl massebezogen, als auch differenziell erfolgen. Da häufig recht lange Wegstrecken zwischen der Folgeelektronik und den Positionsmesseinrichtungen zurückzulegen sind, stellen die Kabel einen nicht zu unterschätzenden Kostenfaktor bei der Projektierung einer Anlage dar. Da die Anzahl der benötigten Adern im Kabel wesentlich auch den Preis bestimmen, ist es ein ständiges Bestreben, die Anzahl der Adern im Kabel minimal zu halten.

Diametral zu diesem Bestreben ist die Anforderung, neben der Positionsinformation auch noch weitere Informationen in der Positionsmesseinrichtung zu generieren, beispielsweise eine Statusmeldung. Um diese aber zur Folgeelektronik übertragen zu können, sind üblicherweise zusätzliche Adern im Kabel notwendig.

Die DE 10 2006 012 074 A1 beschreibt eine Positionsmesseinrichtung, bei der der Zustand einer Überwachungseinrichtung durch Veränderung der Signalamplituden der analogen Positionssignale signalisiert wird. Da sich die Amplitude der Positionssignale aber unmittelbar auf die Positionsauswertung in einer Folgeelektronik auswirkt, kann dies von der Folgeelektronik als Ausfall der Positionsmesseinrichtung interpretiert werden und kann damit zu einem Stillstand der Anlage, in der die Positionsmesseinrichtung betrieben wird, führen.

### ZUSAMMENFASSUNG DER ERFINDUNG

Es ist eine Aufgabe der vorliegenden Erfindung, eine Positionsmesseinrichtung anzugeben, mit der auf einfache Weise Statusmeldungen zu einer Folgeelektronik ausgebbar sind.

Diese Aufgabe wird gelöst durch eine Positionsmesseinrichtung nach Anspruch 1.

Eine erfindungsgemäße Positionsmesseinrichtung umfasst einen Teilungsträger, auf dem eine Messteilung angeordnet ist, eine Abtasteinheit zur Erzeugung von positionsabhängigen Abtastsignalen durch Abtastung der Messteilung und eine Signalverarbeitungseinheit zur Verarbeitung der Abtastsignale zu Positionssignalen. Die Positionsmesseinrichtung ist weiter dadurch gekennzeichnet, dass
- eine Überwachungseinheit vorgesehen ist, der wenigstens ein zu überwachendes Signal zugeführt ist und von der, basierend auf der Überwachung des zu überwachenden Signals, ein Modifikationssignal an eine Modifikationseinheit ausgebbar ist,
- der Modifikationseinheit wenigstens ein Positionssignal zugeführt ist und von der Modifikationseinheit das Positionssignal zur Übertragung wenigstens einer Statusmeldung modifizierbar und als Ausgangssignal an eine Folgeelektronik ausgebbar ist und
- die Modifikation basierend auf dem Modifikationssignal durch Hinzufügen einer Störgröße zu dem wenigstens einen Positionssignal erfolgt.

Weiter ist es Aufgabe der vorliegenden Erfindung, ein Verfahren anzugeben, mit der auf einfache Weise Statusmeldungen zu einer Folgeelektronik ausgebbar sind.

Diese Aufgabe wird gelöst durch ein Verfahren zum Ausgeben einer Statusmeldung nach Anspruch 7.

Vorgeschlagen wird ein Verfahren zum Ausgeben einer Statusmeldung mit einer Positionsmesseinrichtung, umfassend einen Teilungsträger, auf dem eine Messteilung angeordnet ist, eine Abtasteinheit zur Erzeugung von positionsabhängigen Abtastsignalen durch Abtastung der Messteilung und eine Signalverarbeitungseinheit zur Verarbeitung der Abtastsignale zu Positionssignalen. Das Verfahren ist dadurch gekennzeichnet, dass
- eine Überwachungseinheit vorgesehen ist, der wenigstens ein zu überwachendes Signal zugeführt wird und von der, basierend auf der Überwachung des zu überwachenden Signals, ein Modifikationssignal an eine Modifikationseinheit ausgegeben wird,
- der Modifikationseinheit wenigstens ein Positionssignal zugeführt wird und von der Modifikationseinheit das Positionssignal zur Übertragung wenigstens einer Statusmeldung modifiziert und als Ausgangssignal an eine Folgeelektronik ausgegeben wird und
- das wenigstens eine Positionssignal modifiziert wird, indem, basierend auf dem Modifikationssignal, eine Störgröße hinzugefügt wird.

Weitere Vorteile ergeben sich aus den von Anspruch 1, bzw. Anspruch 7 abhängigen Ansprüchen und aus der nachfolgenden Beschreibung vorteilhafter Ausführungsbeispiele.

### KURZE BESCHREIBUNG DER ZEICHNUNGEN

Es zeigt
- Figur 1: ein Blockdiagramm einer erfindungsgemäßen Positionsmesseinrichtung,
- Figur 2: ein Signaldiagramm von Positionssignalen, bzw. Ausgangssignalen im störungsfreien Betrieb,
- Figur 3: ein Signaldiagramm einer ersten Variante, um eine Statusmeldung zur Folgeelektronik zu übertragen,
- Figur 4: ein Signaldiagramm der ersten Variante bei rechteckförmigen Ausgangssignalen,
- Figur 5: ein Signaldiagramm einer zweiten Variante, um eine Statusmeldung zur Folgeelektronik zu übertragen,
- Figur 6: ein Signaldiagramm einer weiteren Variante, um eine Statusmeldung zur Folgeelektronik zu übertragen,
- Figur 7: ein Signaldiagramm einer weiteren Variante, um eine Statusmeldung zur Folgeelektronik zu übertragen,
- Figur 8: ein Blockdiagramm einer weiteren erfindungsgemäßen Positionsmesseinrichtung,
- Figur 9: ein Signaldiagramm der Positionssignale, bzw. Ausgangssignale der Positionsmesseinrichtung nach Figur 8,
- Figur 10: ein Signaldiagramm einer weiteren Variante, um eine Statusmeldung zur Folgeelektronik zu übertragen,
- Figur 11: ein Signaldiagramm einer weiteren Variante, um eine Statusmeldung zur Folgeelektronik zu übertragen und
- Figur 12: ein Blockdiagramm einer weiteren erfindungsgemäßen Positionsmesseinrichtung.

### BESCHREIBUNG DER AUSFÜHRUNGSFORMEN

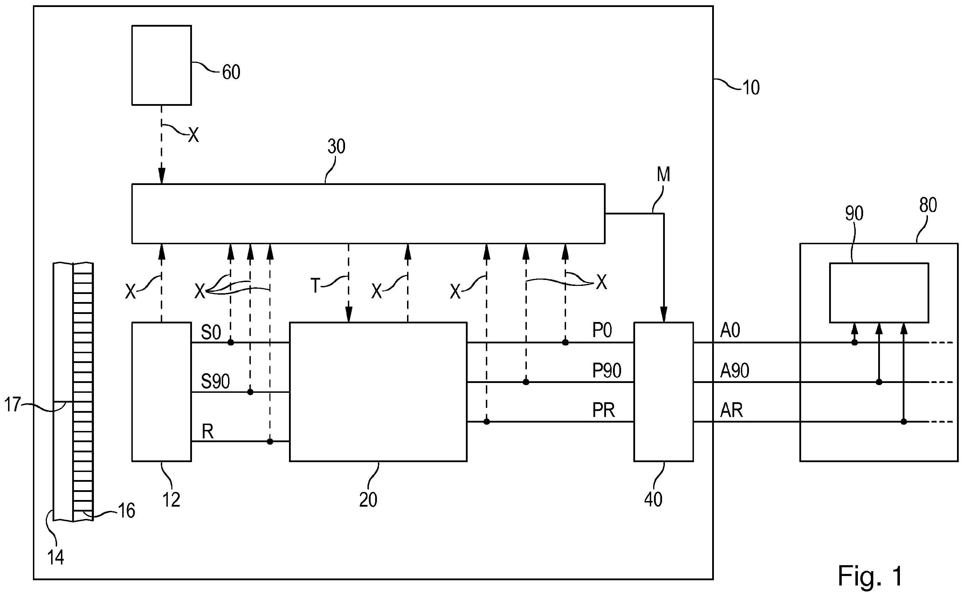

Figur 1 zeigt ein Blockdiagramm einer erfindungsgemäßen Positionsmesseinrichtung 10. Sie umfasst eine Abtasteinheit 12, die geeignet ausgestaltet ist, um eine Messteilung auf einem Teilungsträger 14 abzutasten. Teilungsträger 14 und Abtasteinheit 12 sind dabei in bekannter Weise relativ zueinander beweglich angeordnet, beispielsweise indem sie mit beweglichen Teilen einer Werkzeugmaschine verbunden sind, deren Relativposition zueinander bestimmt werden soll.

Neben dem schematisiert dargestellten Ausführungsbeispiel zur Erfassung von linearen Relativpositionen können auch rotatorische Positionsmesseinrichtungen erfindungsgemäß ausgeführt werden. In diesem Fall ist der Teilungsträger nicht als gerader Maßstab, sondern beispielsweise als kreisrunde Scheibe ausgeführt, bei der die Messteilung radial um ihren Mittelpunkt (der im Betrieb den Drehpunkt einer Achse bildet, deren Winkelposition bzw. Umdrehungszahl gemessen werden soll) angeordnet ist.

Im dargestellten Beispiel besteht die Messteilung aus einer Inkrementalteilungsspur 16 und einer Referenzteilungsspur 17. Aus der Abtastung der Messteilung 16, 17 resultieren Abtastsignale S0, S90, R, die zwei um 90° phasenverschobene Inkrementalsignale S0, S90 aus der Abtastung der Inkrementalteilungsspur 16, sowie ein Referenzsignal R aus der Abtastung der Referenzteilungsspur 17 umfassen. Die Inkrementalsignale S0, S90 sind bei gleichförmiger Bewegung (entsprechend einer konstanten Geschwindigkeit) der Messteilung gegenüber der Abtasteinheit 12 weitgehend sinusförmig. Das Referenzsignal R dient dazu, eine absolute Bezugsposition für die prinzipbedingt relative Positionsmessung der inkrementalen Positionsmesseinrichtung zu liefern. Hierfür wird als Referenzsignal R an einer definierten Position (bzw. im Falle eines Winkelmessgeräts an einer definierten Winkelstellung) ein Impuls generiert.

Die vorliegende Erfindung ist jedoch nicht auf dieses Beispiel eines Abtastprinzips zur Erzeugung von Abtastsignalen, die eine Positionsinformation enthalten, beschränkt. Sie ist vielmehr unabhängig vom physikalischen Abtastprinzip (z.B. optische, magnetische, induktive, kapazitive Abtastung) und der Art und Weise, wie die Positionsinformation in den Abtastsignalen enthalten ist. So sind z.B. auch amplitudenmodulierte oder digital codierte Abtastsignale für die Ausführung der Erfindung geeignet.

Die Abtastsignale S0, S90, R sind einer Signalverarbeitungseinheit 20 zugeführt, die geeignet ausgestaltet ist, diese zu Positionssignalen P0, P90, PR einer inkrementalen Schnittstelle der Positionsmesseinrichtung 10 zu verarbeiten. Je nach Abtastprinzip und daraus resultierender Codierung der Positionsinformation in den Abtastsignalen können verschiedenste Verarbeitungsschritte in der Signalverarbeitungseinheit 20 vorgenommen werden:
- Umwandlung von Strom- in Spannungssignale
- Demodulation
- Filterung
- A/D-Wandlung
- Fehlerkorrektur (z.B. Offsetkorrektur, Phasenkorrektur,...)
- Anpassung der Anzahl von Signalperioden pro Längen- oder Winkeleinheit
- D/A-Wandlung

Die aus der Verarbeitung resultierenden Positionssignale umfassen in diesem Beispiel zwei inkrementale Positionssignale P0, P90 und einen Referenzimpuls PR. Bei den Positionssignalen P0, P90, PR kann es sich, wie in den folgenden Beispielen gezeigt, um analoge Signale handeln. Alternativ können sie aber auch digital vorliegen.

Die Positionssignale P0, P90, PR sind einer Modifikationseinheit 40 zugeführt, die wiederum Ausgangssignale an eine an die Positionsmesseinrichtung 10 angeschlossene Folgeelektronik 80 ausgibt. Die Ausgangssignale umfassen, analog zu den Positionssignalen, zwei inkrementale Ausgangssignale A0, A90, sowie einen Ausgangsreferenzimpuls AR. Somit bilden die Ausgangssignale A0, A90, AR die Signalschnittstelle der Positionsmesseinrichtung 10.

Zur Überwachung von Funktionseinheiten der Positionsmesseinrichtung 10 ist eine Überwachungseinheit 30 vorgesehen. Sie ist geeignet ausgestaltet, um wenigstens einen Funktionsparameter der Positionsmesseinrichtung 10 zu überwachen. Beispiele für zu überwachende Funktionsparameter sind:
- Amplituden der Abtastsignale
- Offset der Inkrementalsignale S0, S90
- Phasenlage der Inkrementalsignale S0, S90 zueinander
- Lage des Referenzsignals R relativ zu den Inkrementalsignalen S0, S90
- Statussignale der Abtasteinheit 12
- Statussignale der Signalverarbeitungseinheit 20
- Amplituden der Positionssignale P0, P90, PR
- Offset der Positionssignale P0, P90, PR
- Phasenlage der inkrementalen Positionssignale P0, P90 zueinander
- Lage des Referenzimpulses PR relativ zu den Positionssignalen P0, P90
- Sensorwerte eines internen Sensors 60 (z.B. Temperatur, Vibrationen, Versorgungsspannung)
- Ergebnisse von Selbsttestfunktionen der Positionsmesseinrichtung 10 (Built-In-Self-Test, BIST)

Entsprechend zu überwachende Signale X sind der Überwachungseinheit 30 zugeführt. Die Überwachung erfolgt durch Vergleich mit Erwartungs- oder Grenzwerten, ggf. können Testsignale T an zu überwachende Einheiten (z.B. die Signalverarbeitungseinheit 20) ausgegeben werden, um Selbsttestfunktionen zu initiieren, deren Ergebnis in Form eines zu überwachenden Signals X der Überwachungseinheit 30 zugeführt ist.

Zur Übermittlung einer Statusinformation, die aus der Überwachung resultiert, an die Folgeelektronik 80, gibt die Überwachungseinheit 30 ein entsprechendes Modifikationssignal M an die Modifikationseinheit 40 aus, die die Übertragung einer Statusmeldung an die Folgeelektronik 80 initiiert. Die Signalisierung erfolgt dadurch, dass in der Modifikationseinheit 40 wenigstens einem der Positionssignale P0, P90, PR eine Störgröße hinzugefügt wird und zwar mit Vorteil in einer Weise, dass die resultierenden Ausgangssignale A0, A90, AR weiterhin auswertbar sind, d.h. der Betrieb der Positionsmesseinrichtung 10 an der Folgeelektronik 80 weiter gewährleistet ist. Besonders geeignete Störgrößen sind ein Signaloffset oder/und eine Lageverschiebung der Signale zueinander.

Empfängerseitig, also seitens der Folgeelektronik 80, ist eine Überwachungseinheit 90 vorgesehen, der wenigstens die Positionssignale P0, P90, PR zugeführt sind, die zur Übertragung von Statusmeldungen genutzt werden. Die empfängerseitige Überwachungseinheit 90 ist geeignet ausgestaltet, um die hinzugefügten Störgrößen zu detektieren, die übermittelte Statusmeldung zu erkennen und geeignete Maßnahmen zu initiieren, beispielsweise die Ausgabe einer Warnmeldung oder das kontrollierte Abschalten der Maschine. Die empfängerseitige Überwachungseinheit 90 kann, wie in Figur 1 dargestellt, innerhalb der Folgeelektronik 80 angeordnet sein, es kann sich aber auch um eine separate Einheit handeln.

Diese Vorgehensweise basiert auf der Erkenntnis, dass die Ausgangssignale moderner Positionsmesseinrichtungen in der Signalverarbeitungseinheit sehr genau erzeugt werden können, während in der Folgeelektronik auch Signale, die weit von den Idealwerten der Signalschnittstelle abweichen, noch ausgewertet werden können. In anderen Worten halten die Ausgangssignale weitaus engere Toleranzen ein, als von der Folgeelektronik gefordert.

### Hierzu ein Beispiel:

Bei einer bekannten Schnittstelle von inkrementalen Positionsmesseinrichtungen weisen die inkrementalen Positionssignale einen Spitze-Spitze-Wert von 1V auf. Die Signale sind bei konstanter Bewegungsgeschwindigkeit (Drehzahl) weitgehend sinusförmig und verlaufen symmetrisch um ein Bezugspotential (meist Massepotential 0V). Die Phasenverschiebung zwischen den inkrementalen Positionssignalen beträgt 90°. Der Referenzimpuls PR ist symmetrisch und sein Maximum liegt an einer Position, bei der die inkrementalen Positionssignale positive Werte und den gleichen Momentanwert aufweisen.

Die Folgeelektronik dagegen kann inkrementale Positionssignale verarbeiten, die einen Offset von 100 mV und mehr aufweisen. Auch eine Abweichung von der idealen Phasenverschiebung um Werte bis zu 30° erlaubt häufig noch eine Auswertung der Positionssignale. Ein Lageversatz des Referenzimpulses PR bezogen auf die inkrementalen Positionssignale P0, P90 in bestimmten Grenzen erlaubt immer noch das sichere Setzen eines Bezugspunktes für die Positionsmessung.

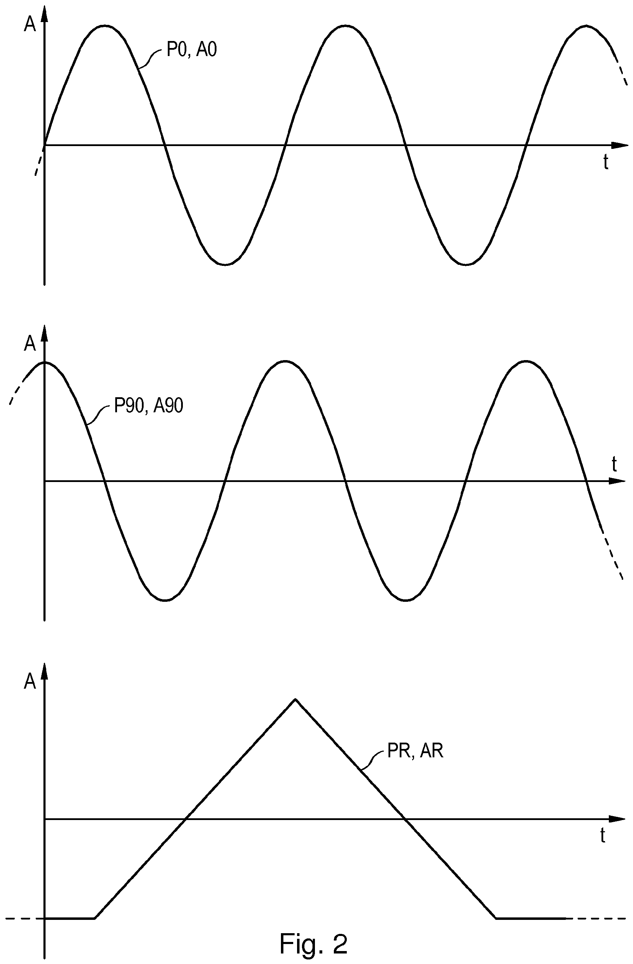

Figur 2 zeigt ein Signaldiagramm der Positionssignale P0, P90, PR (bzw. Ausgangssignale A0, A90, AR) im störungsfreien Betrieb (d.h. ohne eine Statusmeldung zur Folgeelektronik 80 zu übertragen) bei konstanter Geschwindigkeit. Die Positionssignale P0, P90, PR sind analog, d.h. die inkrementalen Positionssignale P0, P90 sind sinusförmig und auch der Referenzimpuls PR zeigt einen analogen Verlauf mit einem definierten Maximalwert. Lägen im Vergleich dazu die Positionssignale P0, P90, PR in digitaler Form vor, so wären die inkrementalen Positionssignale P0, P90 rechteckförmig und der Referenzimpuls PR wäre ein digitaler Puls mit definierter Dauer und Lage bezogen auf die inkrementalen Positionssignale P0, P90. Alle folgenden Beispiele sind sowohl auf analoge, als auch auf digitale Positionssignale P0, P90, PR anwendbar.

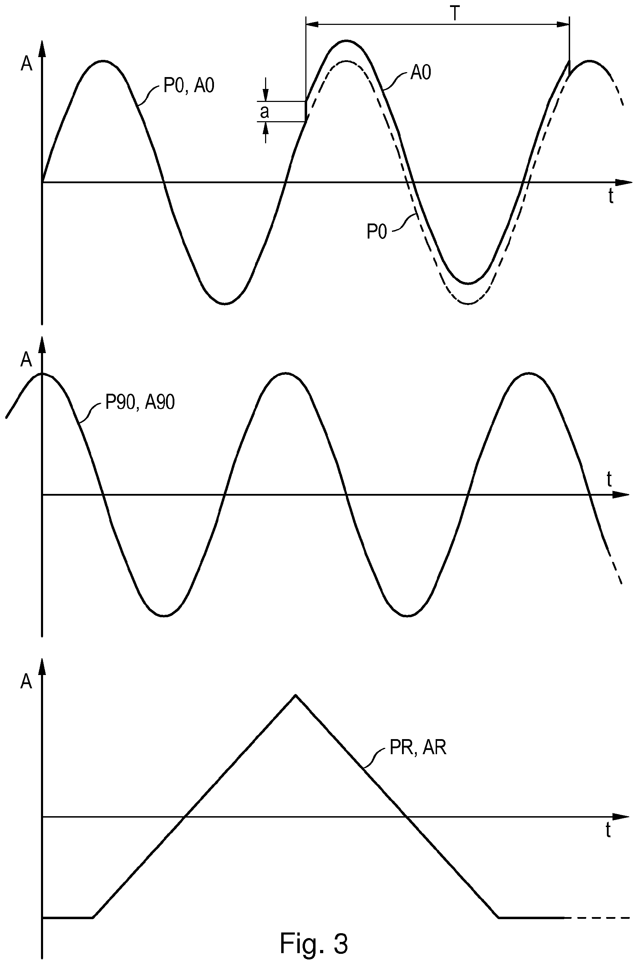

Figur 3 zeigt ein Signaldiagramm einer ersten Variante, um eine Statusmeldung zur Folgeelektronik 80 zu übertragen, am Beispiel des Positionssignals P0, bzw. des Ausgangssignals A0. Die Störgröße, die zur Übertragung der Statusmeldung genutzt wird, ist der Signaloffset, es wird also eine Offsetspannung a für einen Zeitraum T zum Positionssignal P0 addiert, so dass sich für das Ausgangssignal A0 in diesem Zeitraum das Ausgangssignal A0 um die Offsetspannung a verschiebt. Seitens der Folgeelektronik 80 ist diese sprunghafte Änderung des Ausgangssignals A0 von der empfängerseitigen Überwachungseinheit detektierbar, die Statusmeldung kann somit verarbeitet werden.

In diesem Beispiel wird die Statusmeldung temporär für den Zeitraum T ausgegeben. Verschiedene Statusmeldungen können unterschieden werden durch:
- den Zeitraum T
- den Betrag der Offsetspannung a
- die Polarität der Offsetspannung a

Diese Unterscheidungsgrößen sind auch kombinierbar.

Darüber hinaus können Statusmeldungen durch zeitlich aufeinanderfolgendes mehrmaliges Addieren einer Offsetspannung a codiert übertragen werden. Dies entspricht einer seriellen Übertragung der Statusmeldung. Ebenso können zur Übertragung einer Statusmeldung mehrere Ausgangssignale A0, A90, AR herangezogen werden.

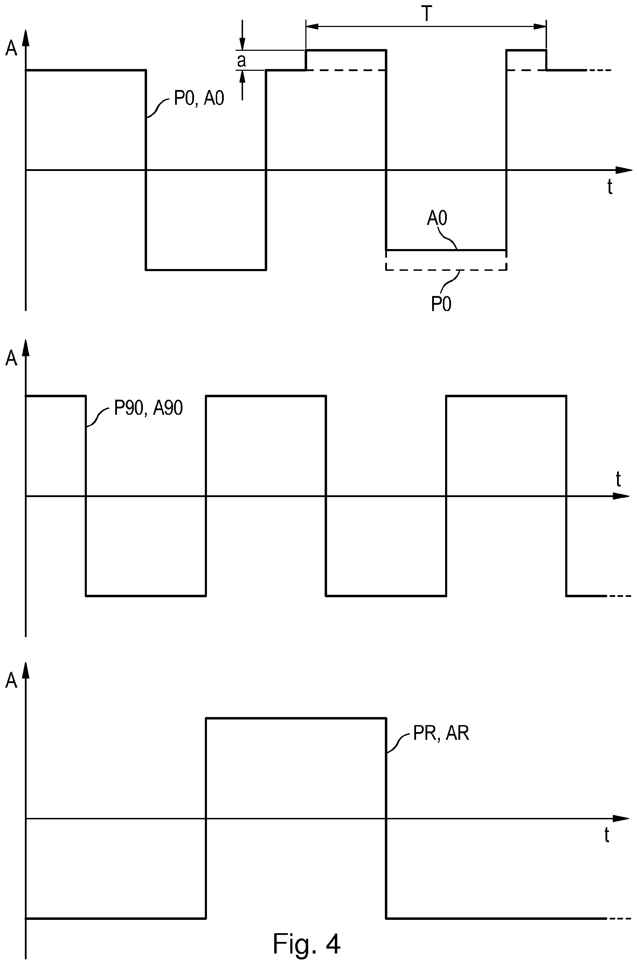

Figur 4 zeigt ein Signaldiagramm der Variante von Figur 3 für den Fall, das die Positionsmesseinrichtung 10 digitale (rechteckförmige) Ausgangssignale ausgibt.

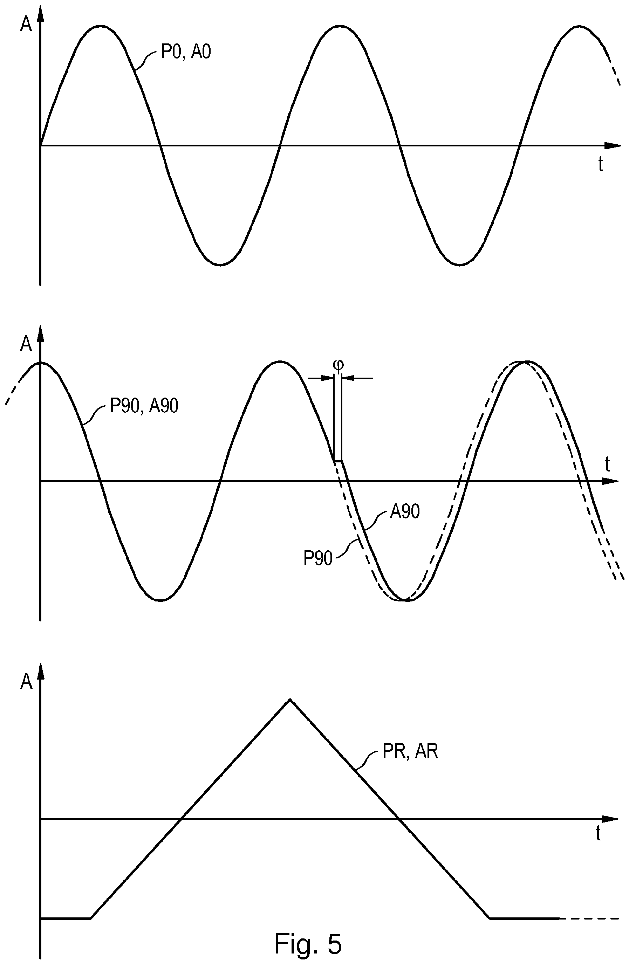

Figur 5 zeigt ein Signaldiagramm einer zweiten Variante, um eine Statusmeldung zur Folgeelektronik 80 zu übertragen, am Beispiel des Positionssignals P90, bzw. des Ausgangssignals A90. Die Störgröße, die hier zur Übertragung der Statusmeldung genutzt wird, ist die Phasenlage, es wird also eines der inkrementalen Positionssignale (im Beispiel das Positionssignal P90) um einen Fehlerwinkel ϕ verschoben, so dass die Phasenverschiebung der Ausgangssignale A0, A90 nun 90° + ϕ beträgt. Die Änderung der Phasenverschiebung ist wiederum von der empfängerseitigen Überwachungseinheit 90 erkennbar.

Unterschiedliche Statusmeldungen können unterschieden werden durch:
- die Zeitdauer der Phasenverschiebung um den Fehlerwinkel ϕ
- der Betrag des Fehlerwinkels ϕ
- das Vorzeichen des Fehlerwinkels ϕ

Auch hier sind diese Unterscheidungsgrößen kombinierbar und es können Statusmeldungen seriell codiert und/oder unter Verwendung mehrerer Ausgangssignale übertragen werden.

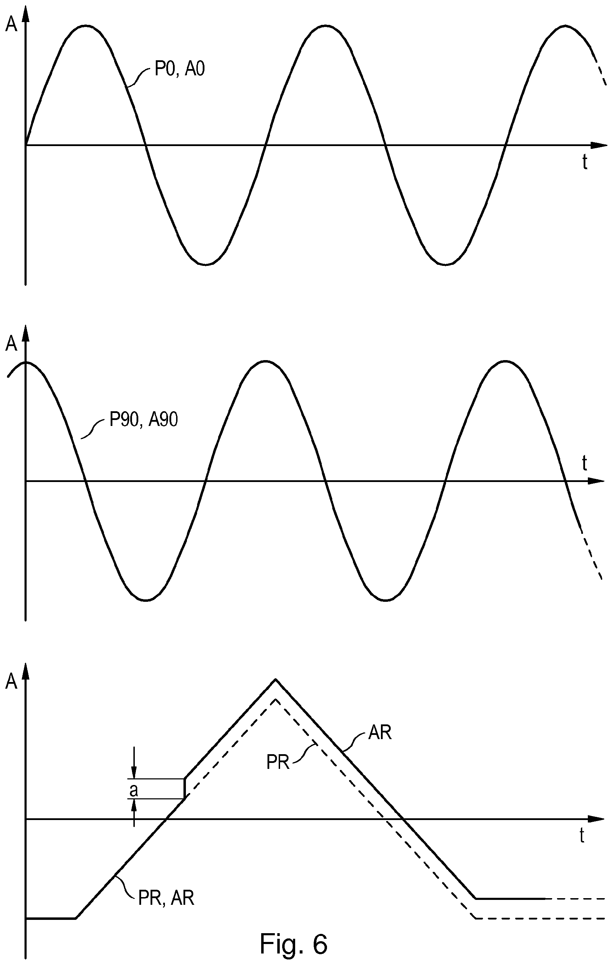

Figur 6 zeigt ein Signaldiagramm einer weiteren Variante zur Übertragung einer Statusmeldung. Hier wird das Signal des Referenzimpulses PR, bzw. des Ausgangsreferenzimpulses AR zur Übertragung der Statusmeldung genutzt und zwar, analog zum Beispiel aus Figur 3, durch Addition einer Offsetspannung a.

Ebenso wäre es möglich, den Referenzimpuls PR zur Übertragung einer Statusmeldung, analog zum Beispiel aus Figur 5, um einen Fehlerwinkel ϕ zu verschieben. In diesem Fall ist zu berücksichtigen, dass zur Übertragung einer Statusmeldung ein Referenzimpuls RP (und somit das Überfahren einer Referenzmarke der Referenzteilungsspur 17 mit der Abtasteinheit 12) erforderlich ist. Die Addition einer Offsetspannung a ist daher zu bevorzugen, wenn eine Statusmeldung unverzüglich oder bei Stillstand übertragen werden muss.

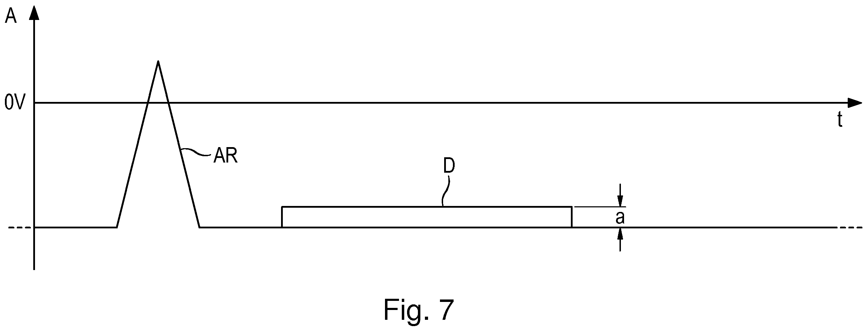

Figur 7 zeigt ein Signaldiagramm einer weiteren Variante zur Übertragung einer Statusmeldung. Auch hier wird das Signal des Referenzimpulses PR, bzw. des Ausgangsreferenzimpulses AR zur Übertragung der Statusmeldung genutzt. In Weiterbildung der Variante nach Figur Z erfolgt die Übertragung der Statusmeldung in Form eines digitalen Datenworts D, das eine Mehrzahl von Bits aufweist. Ein Bit des Datenworts kann beispielsweise durch Addition (logisch "1") oder Nicht-Addition (logisch "0") einer Offsetspannung a codiert werden. Die Übertragung findet mit Vorteil in einem Zeitraum statt, in dem kein Referenzimpuls PR bzw. Ausgangsreferenzimpuls AR ausgegeben wird und der übertragene Signalpegel unterhalb einer Wahrnehmungsschwelle der Folgeelektronik 80 bleibt. Als Wahrnehmungsschwelle ist ein Signalpegel zu verstehen, ab dem die Folgeelektronik 80 den Ausgangsreferenzimpuls AR erkennt, beispielsweise 0V. Für den Aufbau des Datenworts D können Datenworte bekannter serieller Schnittstellen als Beispiel dienen.

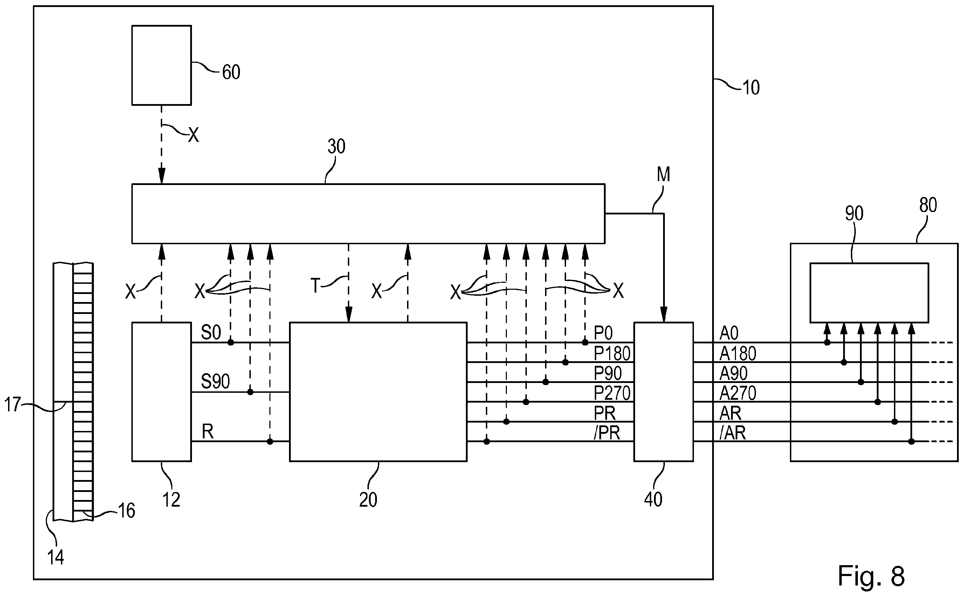

Figur 8 zeigt ein Blockdiagramm einer weiteren erfindungsgemäßen Positionsmesseinrichtung 10. Komponenten, die bereits in Verbindung mit Figur 1 beschrieben wurden, tragen das gleiche Bezugszeichen. Abweichend zu Figur 1 werden die Ausgangssignale A0, A90, A180, A270, AR, /AR in diesem Ausführungsbeispiel differentiell übertragen, d.h. zu jedem Ausgangssignal existiert ein weiteres Ausgangssignal mit inversem Verlauf.

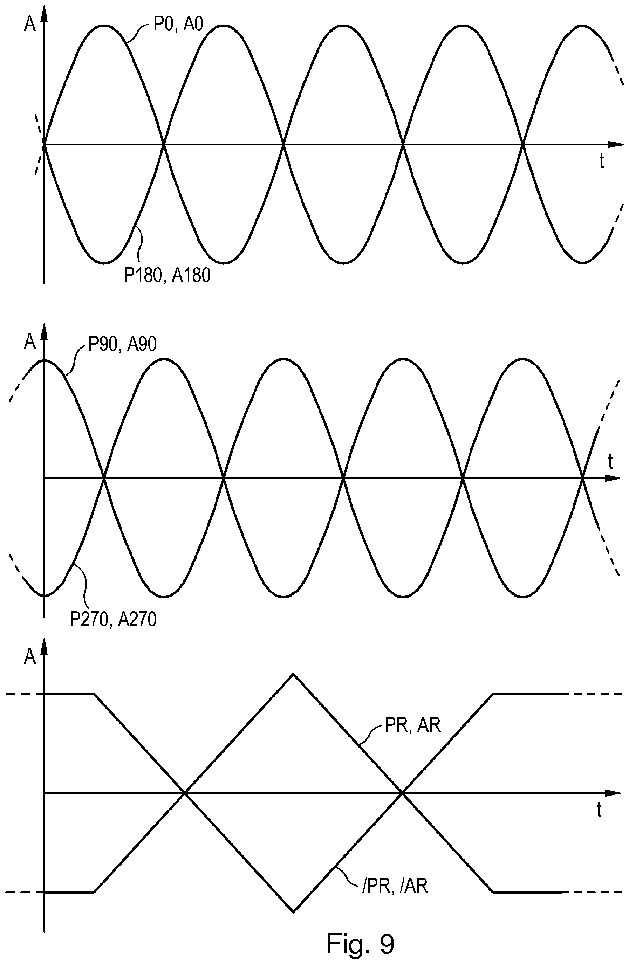

Figur 9 zeigt ein Signaldiagramm der Ausgangssignale P0, P90, P180, P270, PR, /PR (und der korrespondierenden Positionssignale Ausgangssignale A0, A90, A180, A270, AR, /AR) im störungsfreien Betrieb (d.h. ohne eine Statusmeldung zur Folgeelektronik 80 zu übertragen) und bei konstanter Geschwindigkeit. Es handelt sich dabei um das Signaldiagramm aus Figur 2 erweitert um die inversen Signale, so dass sich differentielle Ausgangssignalpaare A0-A180, A90-A270, AR-/AR (resultierend aus korrespondierenden Positionssignalpaaren P0-P180, P90-P270, PR-/PR) bilden.

Differentielle Signalübertragung und vor allem auch die differentielle Auswertung seitens der Folgeelektronik ist in der Automatisierungstechnik weit verbreitet, weil sie robust gegenüber Störeinwirkungen ist. Dies liegt darin begründet, dass Störeinwirkungen auf die Signalübertragungsleitungen beide Signale eines differentiellen Ausgangssignalpaares weitgehend gleich betreffen und sich dadurch die Differenz der Signale nicht ändert. Dieses Verhalten wird optimiert durch Verdrillen der Signalleitungen des Ausgangssignalpaares, so dass eine enge, parallele Leitungsführung gewährleistet ist.

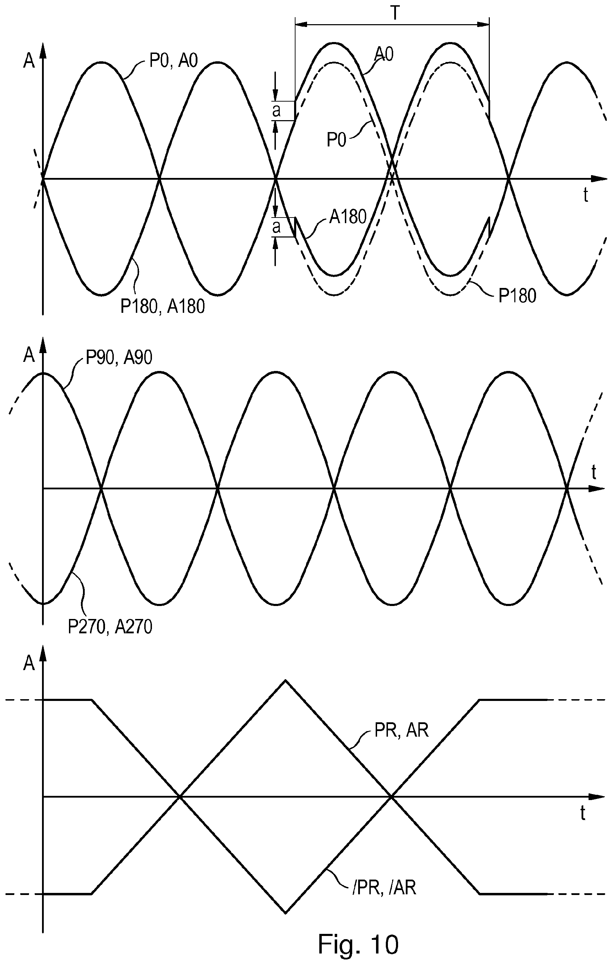

Figur 10 zeigt nun eine besonders vorteilhafte Variante zur Übertragung einer Statusmeldung. Diese Variante kann dann eingesetzt werden, wenn wenigstens ein differentielles Ausgangssignalpaar vorhanden ist, d.h. wenn zu wenigstens einem Ausgangssignal auch ein inverses Ausgangssignal übertragen wird. Basierend auf dem Signaldiagramm aus Figur 8 wird die Übertragung der Statusmeldung anhand des Ausgangssignalpaars PO-P180 gezeigt.

Zur Übertragung der Statusmeldung wird nun zu beiden Signalen des differentiellen Ausgangssignalpaars P0-P180 die gleiche Offsetspannung a addiert. Da auf diese Weise die Differenz der Signale gleich bleibt, wird die Auswertung seitens der Folgeelektronik 80 nicht beeinträchtigt. Dennoch kann die sprunghafte Änderung in der empfängerseitigen Überwachungseinheit 90 sicher erkannt und ausgewertet werden, da sie sich von zufälligen Störeinwirkungen durch definierte Dauer und/oder Amplitude gut unterscheiden lässt.

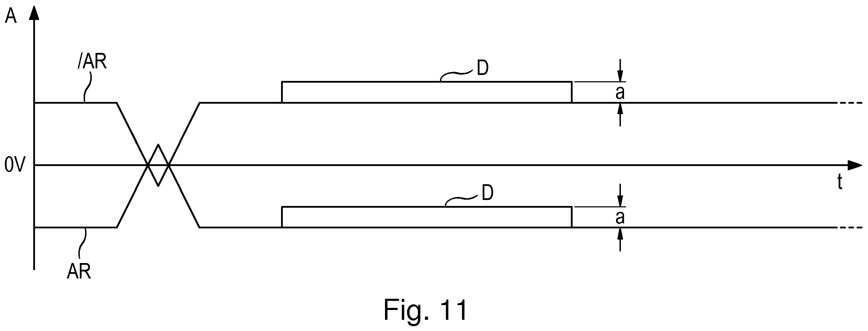

Figur 11 zeigt eine weitere vorteilhafte Variante zur Übertragung einer Statusmeldung. Wie in der anhand von Figur 7 beschriebenen Variante erfolgt die Übertragung der Statusmeldung in Form eines Datenwortes mit einer Anzahl von Bits, die durch Addition (logisch "1") oder Nicht-Addition (logisch "0") einer Offsetspannung a codiert werden. In diesem Ausführungsbeispiel erfolgt die Übertragung jedoch über ein differentielles Ausgangssignalpaar umfassend das Ausgangsreferenzimpulssignal AR und das invertierte Ausgangreferenzimpulssignal /AR, so dass auch die Vorteile der anhand der Figur 10 beschriebenen Variante genutzt werden.

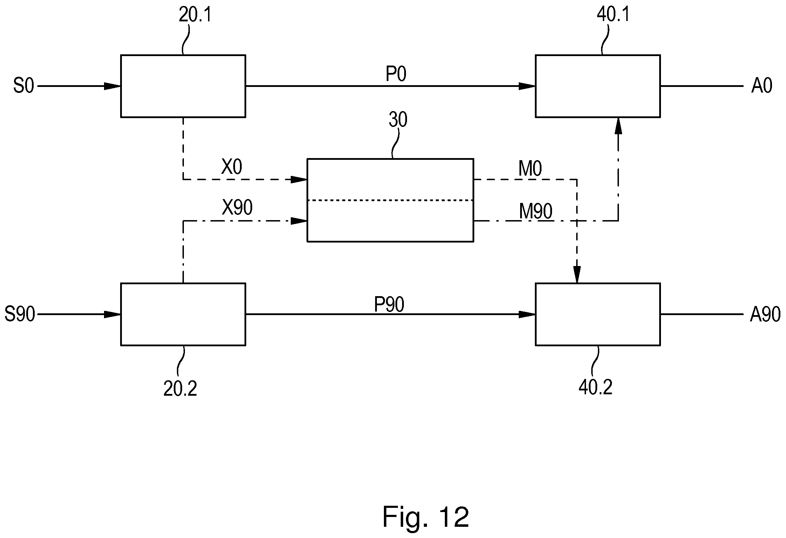

Figur 12 zeigt ein Blockdiagramm einer weiteren, besonders fehlersicheren Ausführung einer erfindungsgemäßen Positionsmesseinrichtung 10, wobei vereinfacht nur die Verarbeitung der Abtastsignale S0, S90 dargestellt ist.

Dieses Ausführungsbeispiel basiert auf der Erkenntnis, dass, wenn das Ereignis, das die Übertragung einer Statusmeldung auslöst, einem Signalpfad zugeordnet werden kann, der der Erzeugung eines der Ausgangssignale P0, P90, PR dient, es vorteilhaft ist zur Übertragung der Statusmeldung ein Ausgangssignal P0, P90, PR zu wählen, das in einem anderen Signalpfad erzeugt wird. So wird vermieden, dass die Übertragung einer Statusmeldung scheitert, weil der zugehörige Signalpfad beschädigt ist.

Im Beispiel sind die Signalpfade zur Verarbeitung des Abtastsignals S0 zum Ausgangssignal A0, sowie die Verarbeitung des Abtastsignals S90 zum Ausgangssignal A90 weitgehend getrennt ausgeführt. So führt der Signalpfad zur Bildung des Ausgangssignals A0 aus dem Abtastsignal S0 über einen ersten Teil der Signalverarbeitungseinheit 20.1 und einen ersten Teil der Modifikationseinheit 40.1. Analog hierzu führt der Signalpfad zur Bildung des Ausgangssignals A90 aus dem Abtastsignal S90 über einen zweiten Teil der Signalverarbeitungseinheit 20.2 und einen zweiten Teil der Modifikationseinheit 40.2.

Vom ersten Teil der Signalverarbeitungseinheit 20.1 ist ein erstes zu überwachendes Signal X0, vom zweiten Teil der Signalverarbeitungseinheit 20.2 ein zweites zu überwachendes Signal X90 der Überwachungseinheit 30 zugeführt. Soll nun beispielsweise resultierend aus der Überwachung des ersten zu überwachenden Signals X0 (und damit aus dem Signalpfad zur Bildung des Ausgangssignals A0) eine Statusmeldung ausgegeben werden, so erfolgt die Ausgabe der Statusmeldung über den zweiten Teil der Modifikationseinheit 40.2 (also über den Signalpfad zur Bildung des Ausgangssignals A90), gesteuert von einem ersten Modifikationssignal M0, das die Überwachungseinheit 30 an den zweiten Teil der Modifikationseinheit 40.2 ausgibt. Analog erfolgt die Ausgabe einer Statusmeldung, die aus der Überwachung des zweiten zu überwachenden Signals X90 (des Signalpfads zur Bildung des Ausgangssignals A90) resultiert, durch Ausgabe eines zweiten Modifikationssignals M90 an den ersten Teil der Modifikationseinheit 40.1.

Um die Trennung der Signalpfade weiter zu verbessern kann die Überwachungseinheit 30, wie durch die gepunktet gezeichnete Linie angedeutet, ebenfalls zweiteilig aufgebaut werden.

Alternativ kann die Ausgabe einer Statusmeldung, die auf der Überwachung der Signalpfade zur Erzeugung der inkrementalen Ausgangssignale A0, A90 basiert, über das Signal des Ausgangsreferenzimpulses AR erfolgen und umgekehrt. Auch in diesem Fall wird zur Ausgabe einer Statusmeldung ein weitgehend getrennt geführter Signalpfad genutzt.

Die vorliegende Erfindung ist selbstverständlich nicht auf die beschriebenen Ausführungsbeispiele begrenzt, sondern kann von einem Fachmann im Rahmen der Patentansprüche alternativ ausgeführt werden.

In Bezug auf die Signaldiagramme in den Figuren sei darauf hingewiesen, dass die Amplituden der Positionssignale P0, P90, P180, P270, PR, /PR und der korrespondierenden Ausgangssignale A0, A90, A180, A270, AR, /AR lediglich der Einfachheit halber identisch dargestellt wurden, sich in der Praxis aber durchaus unterscheiden können.

Ebenso wäre es möglich, die Modifikationseinheit 40 in die Signalverarbeitungseinheit 20 zu integrieren und die Modifikation (das Hinzufügen der Störgröße) zur Übertragung einer Statusmeldung bereits bei der Verarbeitung der Abtastsignale S0, S90, R vorzunehmen. In diesem Fall wären die Positionssignale P0, P90, P180, P270, PR, /PR als virtuelle Signale zu betrachten, die nur der Erläuterung der vorliegenden Erfindung dienen.

Je nach Ausführung der Signalverarbeitungseinheit 20, bzw. der Modifikationseinheit 40 kann das Hinzufügen der Störgröße zu einem Positionssignal durch analoge oder digitale Signalverarbeitungsmittel erfolgen. Bei analoger Verarbeitung kann beispielsweise zur Addition der Offsetspannung zum Positionssignal ein Addierverstärker vorgesehen sein, dem das zu verändernde Positionssignal und die Offsetspannung zugeführt sind. Bei digitaler Verarbeitung werden die Momentanwerte des zu verändernden Positionssignals und der Offsetspannung durch digitale Zahlenwerte repräsentiert, die durch eine entsprechende Rechenschaltung addiert werden. Der resultierende Zahlenwert kann dann durch Digital-Analog-Wandlung zum Ausgangssignal umgewandelt werden.

Die elektronische Schaltung zur Realisierung der Funktionen der Positionsmesseinrichtung 10, insbesondere der Signalverarbeitungseinheit 20, der Überwachungseinheit 30 und der Modifikationseinheit 40, kann mit Vorteil, zumindest teilweise, in einem ASIC integriert sein. Ebenso können Funktionsblöcke als Programm in einem Mikrocontroller, DSP, o.ä. realisiert werden.

## Patentansprüche

1. Positionsmesseinrichtung umfassend einen Teilungsträger (14), auf dem eine Messteilung (16, 17) angeordnet ist, eine Abtasteinheit (12) zur Erzeugung von positionsabhängigen Abtastsignalen (S0, S90, R) durch Abtastung der Messteilung (16, 17) und eine Signalverarbeitungseinheit (20) zur Verarbeitung der Abtastsignale (S0, S90, R) zu Positionssignalen (P0, P90, P180, P270, PR, /PR), **dadurch gekennzeichnet, dass** die Positionsmesseinrichtung weiter eine Überwachungseinheit (30) und eine Modifikationseinheit (40) umfasst, wobei
• der Überwachungseinheit (30) wenigstens ein zu überwachendes Signal (X, X0, X90) zugeführt ist und die Überwachungseinheit (30) ausgestaltet ist, basierend auf der Überwachung des zu überwachenden Signals (X, X0, X90) ein Modifikationssignal (M, M0, M90) an die Modifikationseinheit (40) auszugeben,
• der Modifikationseinheit (40) wenigstens ein Positionssignal (P0, P90, P180, P270, PR, /PR) zugeführt ist und die Modifikationseinheit (40) ausgestaltet ist, das Positionssignal (P0, P90, P180, P270, PR, /PR) zur Übertragung wenigstens einer Statusmeldung zu modifizieren und als Ausgangssignal (A0, A90, A180, A270, AR, /AR) an eine Folgeelektronik (80) auszugeben und
• die Modifikation basierend auf dem Modifikationssignal (M, M0, M90) durch Hinzufügen einer Störgröße zu dem wenigstens einen Positionssignal (P0, P90, P180, P270, PR, /PR) erfolgt.

2. Positionsmesseinrichtung nach Anspruch 1, wobei die Störgröße eine Offsetspannung (a) ist und das Hinzufügen durch Addition der Offsetspannung (a) zum Positionssignal (P0, P90, P180, P270, PR, /PR) erfolgt.

3. Positionsmesseinrichtung nach Anspruch 1, wobei die Störgröße eine Phasenlage ist und das Hinzufügen durch Verschieben eines der Positionssignale (P0, P90, P180, P270, PR, /PR) um einen Fehlerwinkel (ϕ) erfolgt.

4. Positionsmesseinrichtung nach Anspruch 1, wobei die Signalverarbeitungseinheit (20) ausgestaltet ist, wenigstens ein differentielles Positionssignalpaar (P0, P180; P90, P270; PR, /PR) zu erzeugen und die Störgröße zu beiden Signalen des differentiellen Positionssignalpaares (P0, P180; P90, P270; PR, /PR) gleich hinzuzufügen.

5. Positionsmesseinrichtung nach Anspruch 4, wobei die Störgröße eine Offsetspannung (a) ist.

6. Positionsmesseinrichtung nach einem der vorhergehenden Ansprüche, wobei von der Überwachungseinheit (30) ein Testsignal (T) an eine zu überwachende Einheit ausgebbar ist.

7. Verfahren zum Ausgeben einer Statusmeldung mit einer Positionsmesseinrichtung umfassend einen Teilungsträger (14), auf dem eine Messteilung (16, 17) angeordnet ist, eine Abtasteinheit (12) zur Erzeugung von positionsabhängigen Abtastsignalen (S0, S90, R) durch Abtastung der Messteilung (16, 17) und eine Signalverarbeitungseinheit (20) zur Verarbeitung der Abtastsignale (S0, S90, R) zu Positionssignalen (P0, P90, P180, P270, PR, /PR), **dadurch gekennzeichnet, dass** die Positionsmesseinrichtung weiter eine Überwachungseinheit (30) und eine Modifikationseinheit (40) umfasst, wobei
• der Überwachungseinheit (30) wenigstens ein zu überwachendes Signal (X, X0, X90) zugeführt wird und von der Überwachungseinheit (30), basierend auf der Überwachung des zu überwachenden Signals (X, X0, X90), ein Modifikationssignal (M, M0, M90) an die Modifikationseinheit (40) ausgegeben wird,
• der Modifikationseinheit (40) wenigstens ein Positionssignal (P0, P90, P180, P270, PR, /PR) zugeführt wird und von der Modifikationseinheit (40) das Positionssignal (P0, P90, P180, P270, PR, /PR) zur Übertragung wenigstens einer Statusmeldung modifiziert und als Ausgangssignal (A0, A90, A180, A270, AR, /AR) an eine Folgeelektronik (80) ausgegeben wird und
• das wenigstens eine Positionssignal (P0, P90, P180, P270, PR, /PR) modifiziert wird, indem, basierend auf dem Modifikationssignal (M, M0, M90), eine Störgröße hinzugefügt wird.

8. Verfahren nach Anspruch 7, wobei die Störgröße eine Offsetspannung (a) ist, die durch Addition zum Positionssignal (P0, P90, P180, P270, PR, /PR) hinzugefügt wird.

9. Verfahren nach Anspruch 7, wobei die Störgröße eine Phasenlage ist, und das Hinzufügen durch Verschieben eines der Positionssignale (P0, P90, P180, P270, PR, /PR) um einen Fehlerwinkel (ϕ) erfolgt.

10. Verfahren nach Anspruch 7, wobei von der Signalverarbeitungseinheit wenigstens ein differentielles Positionssignalpaar (P0, P180; P90, P270; PR, /PR) erzeugt wird und die Störgröße zu beiden Signalen des differentiellen Positionssignalpaares (P0, P180; P90, P270; PR, /PR) gleich hinzugefügt wird.

11. Verfahren nach Anspruch 10, wobei die Störgröße eine Offsetspannung (a) ist.

12. Verfahren nach einem der Ansprüche 7 bis 11, wobei von der Überwachungseinheit (30) ein Testsignal (T) an eine zu überwachende Einheit ausgeben wird.

13. Verfahren nach einem der Ansprüche 7 bis 12, wobei die Statusmeldung in Form eines Datenwortes (D) mit einer Anzahl von Bits, die durch Addition oder Nicht-Addition einer Offsetspannung (a) codiert werden, übertragen wird.

## Claims

1. Position measuring device comprising a graduation carrier (14), on which a measurement graduation (16, 17) is arranged, a scanning unit (12) for generating position-dependent scanning signals (S0, S90, R) by scanning the measurement graduation (16, 17), and the signal processing unit (20) for processing the scanning signals (S0, S90, R) to form position signals (P0, P90, P180, P270, PR, /PR), **characterized in that** the position measuring device further comprises a monitoring unit (30) and a modification unit (40), wherein
• at least one signal (X, X0, X90) to be monitored is fed to the monitoring unit (30) and the monitoring unit (30) is configured to output a modification signal (M, M0, M90) to the modification unit (40) on the basis of the monitoring of the signal (X, X0, X90) to be monitored,
• at least one position signal (P0, P90, P180, P270, PR, /PR) is fed to the modification unit (40) and the modification unit (40) is configured to modify the position signal (P0, P90, P180, P270, PR, /PR) for transmitting at least one status message and to output it as output signal (A0, A90, A180, A270, AR, /AR) to downstream electronics (80), and
• the modification is carried out on the basis of the modification signal (M, M0, M90) by adding a disturbance variable to the at least one position signal (P0, P90, P180, P270, PR, /PR).

2. Position measuring device according to Claim 1, wherein the disturbance variable is an offset voltage (a) and the adding is carried out by addition of the offset voltage (a) to the position signal (P0, P90, P180, P270, PR, /PR)

3. Position measuring device according to Claim 1, wherein the disturbance variable is a phase angle and the adding is carried out by shifting one of the position signals (P0, P90, P180, P270, PR, /PR) by an error angle (ϕ).

4. Position measuring device according to Claim 1, wherein the signal processing unit (20) is configured to generate at least one differential position signal pair (P0, P180; P90, P270; PR, /PR) and to add the disturbance variable equally to both signals of the differential position signal pair (P0, P180; P90, P270; PR, /PR).

5. Position measuring device according to Claim 4, wherein the disturbance variable is an offset voltage (a).

6. Position measuring device according to any of the preceding claims, wherein a test signal (T) is able to be output by the monitoring unit (30) to a unit to be monitored.

7. Method for outputting a status message with a position measuring device comprising a graduation carrier (14), on which a measurement graduation (16, 17) is arranged, a scanning unit (12) for generating position-dependent scanning signals (S0, S90, R) by scanning the measurement graduation (16, 17), and a signal processing unit (20) for processing the scanning signals (S0, S90, R) to form position signals (P0, P90, P180, P270, PR, /PR), **characterized in that** the position measuring device further comprises a monitoring unit (30) and a modification unit (40), wherein
• at least one signal (X, X0, X90) to be monitored is fed to the monitoring unit (30) and the monitoring unit (30) outputs a modification signal (M, M0, M90) to the modification unit (40) on the basis of the monitoring of the signal (X, X0, X90) to be monitored,
• at least one position signal (P0, P90, P180, P270, PR, /PR) is fed to the modification unit (40) and the modification unit (40) modifies the position signal (P0, P90, P180, P270, PR, /PR) for transmitting at least one status message and outputs it as output signal (A0, A90, A180, A270, AR, /AR) to downstream electronics (80), and
• the at least one position signal (P0, P90, P180, P270, PR, /PR) is modified in which a disturbance variable is added on the basis of the modification signal (M, M0, M90).

8. Method according to Claim 7, wherein the disturbance variable is an offset voltage (a), which is added by addition to the position signal (P0, P90, P180, P270, PR, /PR).

9. Method according to Claim 7, wherein the disturbance variable is a phase angle and the adding is carried out by shifting one of the position signals (P0, P90, P180, P270, PR, /PR) by an error angle (ϕ).

10. Method according to Claim 7, wherein the signal processing unit generates at least one differential position signal pair (P0, P180; P90, P270; PR, /PR) and adds the disturbance variable equally to both signals of the differential position signal pair (P0, P180; P90, P270; PR, /PR).

11. Method according to Claim 10, wherein the disturbance variable is an offset voltage (a).

12. Method according to any of Claims 7 to 11, wherein a test signal (T) is output by the monitoring unit (30) to a unit to be monitored.

13. Method according to any of Claims 7 to 12, wherein the status message is transmitted in the form of a data word (D) having a number of bits which are encoded by addition or non-addition of an offset voltage (a).

## Revendications

1. Dispositif de mesure de position comprenant un support de graduation (14) sur lequel est disposée une graduation de mesure (16, 17), une unité de balayage (12) pour générer des signaux de balayage dépendant de la position (S0, S90, R) en balayant la graduation de mesure (16, 17), et une unité de traitement du signal (20) pour traiter les signaux de balayage (S0, S90, R) afin d'obtenir des signaux de position (P0, P90, P180, P270, PR, /PR), **caractérisé en ce que** le dispositif de mesure de position comprend en outre une unité de surveillance (30) et une unité de modification (40), dans lequel
- au moins un signal à surveiller (X, X0, X90) est envoyé à l'unité de surveillance (30) et l'unité de surveillance (30) est configurée pour délivrer, sur la base de la surveillance du signal (X, X0, X90) à surveiller, un signal de modification (M, MO, M90) à l'unité de modification (40),
- au moins un signal de position (P0, P90, P180, P270, PR, /PR) est envoyé à l'unité de modification (40) et l'unité de modification (40) est configurée pour modifier le signal de position (P0, P90, P180, P270, PR, /PR) afin de transmettre au moins un message d'état et pour le délivrer en tant que signal de sortie (A0, A90, A180, A270, AR, /AR) à un système électronique aval (80), et
- la modification est effectuée sur la base du signal de modification (M, MO, M90) en ajoutant une grandeur de perturbation audit au moins un signal de position (P0, P90, P180, P270, PR, /PR).

2. Dispositif de mesure de position selon la revendication 1, dans lequel la grandeur de perturbation est une tension de décalage (a) et l'ajout est effectué par addition de la tension de décalage (a) au signal de position (P0, P90, P180, P270, PR, /PR).

3. Dispositif de mesure de position selon la revendication 1, dans lequel la grandeur de perturbation est un angle de phase et l'addition est effectuée en décalant l'un des signaux de position (P0, P90, P180, P270, PR, /PR) d'un angle de défaut (ϕ).

4. Dispositif de mesure de position selon la revendication 1, dans lequel l'unité de traitement du signal (20) est conçue pour générer au moins une paire différentielle de signaux de position (P0, P180 ; P90, P270 ; PR, /PR) et pour ajouter de manière égale la grandeur de perturbation aux deux signaux de la paire différentielle de signaux de position (P0, P180 ; P90, P270 ; PR, /PR).

5. Dispositif de mesure de position selon la revendication 4, dans lequel la grandeur de perturbation est une tension de décalage (a).

6. Dispositif de mesure de position selon l'une des revendications précédentes, dans lequel un signal de test (T) peut être délivré par l'unité de surveillance (30) à une unité à surveiller.

7. Procédé d'émission d'un message d'état au moyen d'un dispositif de mesure de position comprenant un support de graduation (14) sur lequel est disposée une graduation de mesure (16, 17), une unité de balayage (12) pour générer des signaux de balayage dépendant de la position (S0, 590, R) en balayant la graduation de mesure (16, 17) et une unité de traitement du signal (20) pour traiter les signaux de balayage (S0, S90, R) afin d'obtenir des signaux de position (P0, P90, P180, P270, PR /PR), **caractérisé en ce que** le dispositif de mesure de position comprend en outre une unité de surveillance (30) et une unité de modification (40), dans lequel
- au moins un signal à surveiller (X, X0, X90) est envoyé à l'unité de surveillance (30) et un signal de modification (M, MO, M90) est délivré, sur la base de la surveillance du signal à surveiller (X, X0, X90), par l'unité de surveillance (30) à l'unité de modification (40),
- au moins un signal de position (P0, P90, P180, P270, PR, /PR) est envoyé à l'unité de modification (40) et le signal de position (P0, P90, P180, P270, PR, /PR) est modifié par l'unité de modification (40) afin de transmettre au moins un message d'état et est délivré en tant que signal de sortie (A0, A90, A180, A270, AR, /AR) à un système électronique aval (80), et
- ledit au moins un signal de position (P0, P90, P180, P270, PR, /PR) est modifié sur la base du signal de modification (M, M0, M90) en ajoutant une grandeur de perturbation,

8. Procédé selon la revendication 7, dans lequel la grandeur de perturbation est une tension de décalage (a) qui est ajoutée par addition au signal de position (P0, P90, P180, P270, PR, /PR).

9. Procédé selon la revendication 7, dans lequel la grandeur de perturbation est un angle de phase, et l'ajout est effectué en décalant l'un des signaux de position (P0, P90, P180, P270, PR, /PR) d'un angle de défaut (ϕ).

10. Procédé selon la revendication 7, dans lequel au moins une paire différentielle de signaux de position (P0, P180 ; P90, P270 ; PR, /PR) est générée par l'unité de traitement du signal et la grandeur de perturbation est ajoutée de manière égale aux deux signaux de la paire différentielle de signaux de position (P0, P180 ; P90, P270 ; PR, /PR).

11. Procédé selon la revendication 10, dans lequel la grandeur de perturbation est une tension de décalage (a).

12. Procédé selon l'une des revendications 7 à 11, dans lequel un signal de test (T) est délivré par l'unité de surveillance (30) à une unité à surveiller.

13. Procédé selon l'une des revendications 7 à 12, dans lequel le message d'état est transmis sous la forme d'un mot de données (D) comportant un certain nombre de bits codés par addition ou par non-addition d'une tension de décalage (a).
